# EUROPÄISCHE PATENTSCHRIFT

(11) **EP 3 331 829 B1**
(45) Veröffentlichungstag und Bekanntmachung des Hinweises auf die Patenterteilung: **04.05.2022**
(21) Anmeldenummer: 16747776.9
(22) Anmeldetag: 04.08.2016
(51) Int. Cl.: C02F 1/44, C02F 1/68, C02F 1/28, C02F 1/66

(54) **VERFAHREN ZUR ANREICHERUNG VON WASSER MIT MINERALIEN**
METHOD FOR ENRICHING WATER WITH MINERALS
PROCÉDÉ D'ENRICHISSEMENT DE L'EAU EN MINÉRAUX

(30) Priorität: 04.08.2015 DE 102015112778
(43) Veröffentlichungstag der Anmeldung: 13.06.2018
(73) Patentinhaber: BWT AG, 5310 Mondsee (AT)
(72) Erfinder: JOHANN, Jürgen, 69226 Nußloch (DE); TRIANTAFILLIDIS, Christos, 5020 Salzburg (AT); BISSEN, Monique, Dr., 75175 Pforzheim (DE); LEITNER, Erwin, 75446 Wiernsheim (DE)
(74) Vertreter: Friderichs, Gunther
(86) Internationale Anmeldenummer: PCT/EP2016/068649
(87) Internationale Veröffentlichungsnummer: WO 2017/021492

(56) Entgegenhaltungen:
- EP-A1- 2 623 467
- DE-U1-202008 015 209
- JP-A- H04 150 990

## Beschreibung

### Gebiet der Erfindung

Die Erfindung betrifft ein Verfahren zur Anreicherung von entsalztem oder natürlich weichem Wasser mit Mineralien. Insbesondere betrifft die Erfindung ein Verfahren mittels welchem ein magnesium- und calciumhaltiges Wasser zur Zubereitung von Getränken, insbesondere zur Zubereitung von Heißgetränken, im speziellen Espresso, bereitgestellt wird.

Dies ist wünschenswert, da ein ausgewogenes Verhältnis von Mineralien, im speziellen Calzium und Magnesium, als Geschmacksträger für Tee und Kaffee sehr empfehlenswert ist, wie die Erfahrungen mit anderen Produkten speziell mit der Mg²⁺ Technologie gezeigt haben. Außerdem wird durch die Anreicherung mit Mineralien eine Erhöhung des pH-Wertes erreicht, welches als Korrosionsschutz für obige Geräte dient.

Der Begriff "Remineralisation", wie in der vorliegenden Erfindung verwendet, bezieht sich auf die definierte Zugabe der beschriebenen Mineralien in Wässern, die keine oder nur geringe Mengen an Mineralien oder in einer nicht ausreichenden Menge enthalten, um diese Wässer in Kaffee-, Espresso- oder Vending-Maschinen optimal einzusetzen.

### Hintergrund der Erfindung

Aus der Praxis bekannt sind Umkehrosmosen oder Ionenaustauscher, mittels welche Trinkwasser enthärtet und/oder entsalzt wird und zur Zubereitung von Getränken und Suppen, insbesondere zur Zubereitung von Heißgetränken, verwendet wird. Es gibt insbesondere in die Leitung eingesetzte Filtervorrichtungen, welche eine Kartusche mit einem Ionenaustauschermaterial umfassen. Derartige Vorrichtungen werden oft Maschinen zur Zubereitung von Heißgetränken vorgeschaltet oder sind in diese integriert.

Ein entsalztes oder natürlich weiches Wasser hat durch den Mangel an pH- Puffersalzen einen niedrigen (sauren) pH-Wert. Daher weist ein solches Wasser hohe korrosive Eigenschaften auf. Um Korrosion an wasserberührten Metallen von Geräten und Leitungen zu vermeiden und um das Wasser, respektive das fertige Produkt wie Kaffee, Tee, Suppen usw., schmackhafter zu machen, ist es notwendig dem Wasser die vorher beschriebenen Stoffe beizugeben. Außerdem kann ein vollentsalztes Rohwasser aus gesundheitlichen Gründen auf Dauer nicht direkt als Quelle für Trinkwasser verwendet werden, da dem Körper keine Mineralien und Spurenelemente zugeführt werden, diese sogar teilweise dem Körper entzogen werden.

Aus dem Dokument DE 10 020 437 A1 ist es bekannt, ein vorher im Membranverfahren enthärtetes Wasser im Anschluss über ein Dolomitbett zu leiten.

So soll das Wasser mit Calcium und Magnesium mineralisiert und eine gleichbleibende Wasserqualität erreicht werden.

Es hat sich aber gezeigt, dass für die beabsichtigte Anreicherung des Wassers mit Mineralien wie Calcium und Magnesium ein derartiges Dolomitfilterbett derart groß dimensioniert werden muss, dass die Bereitstellung des Dolomitbettes in Form einer Filterkerze nicht praktikabel ist.

Das Dokument JP H04 150990 A zeigt eine Vorrichtung mit einem Aragonit-Granulat und einem Filter mit Fasern zum Aufbereiten von Flusswasser. Das Dokument DE 20 2008 015209 U1 zeigt eine Wasserbehandlungseinrichtung mit einem Granulat und einem Membranfilter.

### Aufgabe der Erfindung

Der Erfindung liegt demgegenüber die Aufgabe zugrunde, die genannten Nachteile des Standes der Technik zu reduzieren.

Aufgabe der vorliegenden Erfindung ist es, ein Verfahren zu beschreiben, um Wasser in einer annähernd gleichbleibenden Qualität zu liefern und eine optimale Remineralisierung mit Mineralien zu gewährleisten.

Es ist insbesondere eine Aufgabe der Erfindung, ein Verfahren bereit zu stellen, bei welchem eine Mineralisierung von entsalztem oder natürlich weichem Wasser mit Calcium und Magnesium, in einem für Espresso- oder Vending-Maschinen optimalem Verhältnis, in einer kompakt ausgebildeten Vorrichtung, insbesondere ausgebildet als Filterkerze, möglich ist.

### Zusammenfassung der Erfindung

Die Aufgabe der Erfindung wird bereits durch ein Verfahren zur Anreicherung von entsalztem oder natürlich weichem Wasser mit Mineralien nach Anspruch 1 gelöst.

Bevorzugte Ausführungsformen und Weiterbildungen der Erfindung sind dem Gegenstand der abhängigen Ansprüche zu entnehmen.

Für das Verfahren kann eine Vorrichtung zur Anreicherung von entsalztem oder natürlich weichem Wasser mit Mineralien verwendet werden. Diese umfasst ein Gehäuse, welches mit einem magnesiumhaltigen Granulat beziehungsweise mit einem calciumhaltigen Granulat gefüllt ist. Es kann dabei
- allein magnesiumhaltiges Granulat,
- allein calciumhaltiges Granulat, oder
- eine Mischung aus magnesiumhaltigem und calciumhaltigem Granulat, insbesondere in Form von einem Granulat, bei welchem die einzelnen Partikel aus einer Mischung aus magnesiumhaltigem und calciumhaltigem Material bestehen, beziehungsweise jeweils eine Schicht oder alternierende Schichten von magnesiumhaltigem und calciumhaltigem Granulat
als Füllung eingesetzt werden.

Zur Mineralisierung kann dabei im Rahmen sowohl natürliches als auch synthetisiertes, also künstliches Material verwendet werden. An natürlichem Ausgangsmaterial für das zu verwendende Granulat kommt beispielsweise Dolomit, Calzit und/oder Muschelkalk in Frage. An künstlichem Material kann beispielsweise reines Magnesiumoxid, Calciumcarbonat, Magnesiumcarbonat, Magnesiumphosphat, Magnesiumhydrogenphosphat, Magnesiumdihydrogenphosphat, Trimagnesiumphosphat, Calciumhydrogenphosphat, Calciumdihydrogenphosphat und/oder Tricalciumphosphat eingesetzt werden.

Vorzugsweise ist in einer Ausführungsform sowohl ein magnesiumhaltiges als auch ein calciumhaltiges Granulat im Gehäuse vorgelegt, wobei, in Strömungsrichtung gesehen, beispielsweise zunächst das magnesiumhaltige und sodann das calciumhaltige Granulat angeordnet ist.

Unter natürlich weichem Wasser im Sinne der Erfindung wird Wasser mit weniger als 7,5, vorzugsweise weniger als 4°dH verstanden. Unter entsalztem Wasser wird Wasser verstanden, welches vorher enthärtet wurde, insbesondere mittels Umkehrosmose.

Der Granulatschüttung in Strömungsrichtung folgend ist zumindest ein Filter angeordnet, um feine Partikel, welche sich von den Granulaten ablösen, festzuhalten. Dieser Filter kann als "Feinfilter" und/oder als "Ultrafilter" ausgebildet sein. Gemäß einer ersten Ausführungsform ist in Strömungsrichtung nach dem magnesiumhaltigen und calciumhaltigen Granulat ein Feinfilter mit einer mittleren Porengröße von unter 50 µm, vorzugsweise von unter 10 µm, angeordnet.

Besonders geeignet sind Filter, die aus verpressten Fasern, insbesondere meltblown Fasern, bestehen. Diese haben eine undefinierte Verteilung der Poren, was dazu führt, dass in einem großen Volumen Partikel im Filter zurückgehalten werden können.

Der englische Begriff "meltblown" wird auch in der deutschen Sprache häufig anstelle des Ausdrucks "schmelzgeblasen" verwendet für einen Prozess, in dem nichtgewebte Stoffe direkt aus Granulat hergestellt werden. Ausgangsmaterial ist ein thermoplastischer Kunststoff in Form eines Granulats, das in einem Extruder aufgeschmolzen und anschließend durch eine große Anzahl sehr feiner Düsen gepresst wird. Unmittelbar nach dem Austritt aus den Düsen werden die einzelnen Filamente durch heiße, in Austrittsrichtung der Filamente strömende Luft im noch flüssigen Zustand verstreckt, verwirbelt und erstarren innerhalb weniger Millisekunden zur sehr feinen Endlosfaser. Insbesondere gehört die Meltblown-Technologie zu den effizientesten Methoden bei der Erzeugung sehr feiner und hoch abscheidender Filtermedien.

Der Feinfilter hat insbesondere eine mittlere Porengröße zwischen 0,1 und 10 µm, sowie eine Wandstärke von 5 bis 40 mm, vorzugsweise von 8 bis 20 mm. In einer bevorzugten Ausführungsform ist die Porengröße weiter reduziert, so dass bereits ein Ultrafilter verwendet wird mit mittleren Porengrößen von maximal 0,2 Mikrometern, insbesondere mit mittleren Porengrößen von maximal 0,1 Mikrometern, vorzugsweise mit Porengrößen von maximal 0,2 Mikrometern.

Der Erfindung liegt die Erkenntnis zugrunde, dass es bereits mittels eines derartigen Feinfilters möglich ist, feine Partikel, welche sich von den Granulaten ablösen, zurück zu halten. Hierdurch wird die verfügbare Oberfläche erheblich vergrößert, was es ermöglicht, die Vorrichtung wesentlich kompakter auszugestalten als wenn lediglich ein calcium- und magnesiumhaltiges Filterbett vorhanden wäre. Insbesondere konnte durch die Verwendung des Feinfilters das Volumen der Vorrichtung um etwa Faktor 10 reduziert werden, was einen kommerziellen Einsatz als Filterkerze ermöglicht.

Die in den Feinfilter eingeschwemmten feinen Partikel lösen sich langsam auf und geben dabei Calcium- und MagnesiumSalze an das aufzubereitende Wasser, insbesondere als Calciumhydrogencarbonat beziehungsweise Magnesiumcarbonat, ab. Das darüber angeordnete Bett mit dem calcium- und magnesiumhaltigen Granulat sorgt für eine ständige Nachlieferung von Feinstpartikeln - die durch das Auflösen immer kleiner werden - während des Betriebs und damit für eine lange Lebensdauer der Vorrichtung.

Insbesondere konnte eine Vorrichtung bereitgestellt werden, welche bei Verwendung eines magnesium- und calciumhaltigen Granulats mit einem Volumen von weniger 3 l (im trockenen Zustand) eine Kapazität von über 10000 l erreicht.

Als magnesiumhaltiges Granulat wird vorzugsweise kalziniertes Magnesiumcarbonat, insbesondere Magnesit oder Magnesiumoxid, verwendet.

Das magnesiumhaltige Granulat hat vorzugsweise eine mittlere Partikelgröße von 0,1-6 mm, besonders bevorzugt von 2-4 mm.

Restbestandteile von kalzinierten, aus Magnesiumcarbonat gewonnenem Granulat, sind insbesondere noch Siliziumoxid sowie in geringen Mengen Eisen- und Aluminiumoxid.

Als calciumhaltiges Granulat wird vorzugsweise Kalksteinfeinsand verwendet.

Insbesondere wird Feinsand mit einer mittleren Partikelgröße zwischen 0,3 und 4 mm, vorzugsweise zwischen 0,4 und 3 mm, verwendet.

Der Gesamtanteil an Calciumcarbonat und Magnesiumcarbonat liegt vorzugsweise über 70, besonders bevorzugt über 90 %.

Insbesondere wird ein Kalksteinfeinsand verwendet, welcher in der Trockensubstanz über 95 % Calciumcarbonat aufweist.

Als Feinfilter kann insbesondere ein Filter aus schmelzgeblasenen, also "meltblown" Fasern verwendet werden. Insbesondere sind derartige Filter aus Polypropylen kommerziell erhältlich.

Bei einer bevorzugten Ausführungsform ist der Feinfilter als Röhre ausgebildet. Eine derartige Röhre kann in einer Filterkerze auf einfache Wiese abstromseitig zum Granulat eingesetzt werden.

Die Länge der Filterkerze beträgt bei einer bevorzugten Ausführungsform zwischen 5 und 50 cm, insbesondere 8 bis 25 cm, vorzugsweise zwischen 10 bis 15 cm.

Vorzugsweise nimmt der Feinfilter mindestens das 0,1-, vorzugsweise mindestens das 0,25-fache Volumen des magnesium- und calciumhaltigen Granulats (im trockenen Zustand) ein. So wird eine hinreichende Vergrößerung der Oberfläche sichergestellt. Bei Verwendung einer Mischung aus calciumhaltigen und magnesiumhaltigen Granulat hat es sich als zweckmäßig herausgestellt, dass das calciumhaltige Granulat das 5fache bis 50fache, vorzugsweise das 10fache bis 30fache Volumen des magnesiumhaltigen Granulats aufweist.

Die Aufgabe wird demnach dadurch gelöst, dass entsalztes oder natürlich weiches Wasser mit Mineralien angereichert wird, um eine Geschmacksverbesserung des Endproduktes beispielsweise auch beim Einsatz in Kaffee-, Espresso- oder Vending-Maschinen zu erreichen. Bei natürlich weichen Wässern reicht es aus, das Wasser mit einer definierten Zugabe an Mineralien, insbesondere in Form von Mg²⁺ und/oder Ca²⁺, zu optimieren. Hierzu wird das Wasser über eine oben beschriebene Vorrichtung, welche beispielsweise als Filterkerze ausgebildet ist und die mit calzium- und magnesiumhaltigen Granulat gefüllt ist, geleitet.

Insbesondere kann Wasser in einem vorgelagerten ersten Schritt zunächst, beispielsweise mittels einer Umkehrosmose, auf eine annähernd gleichbleibende Qualität (möglichst rein) eingestellt und danach in einem zweiten Schritt mit Mineralien angereichert werden.

Um eine noch bessere Anreicherung des Wassers mit Mineralien zu erreichen und gleichzeitig Feinstpartikel zurück zu halten und somit den Maschinenschutz zu verbessern, wird das Wasser gemäß einer weiteren Ausführungsform der Erfindung über einen Ultrafilter, insbesondere mit einer mittleren Porengröße von 0,1 Mikrometern, geleitet. Während bei einem Feinfilter die aus dem magnesium- und calciumhaltigen Granulat ausgeschwemmten Partikeln ein Stück weit in das Innere des Filtermaterials eingetragen werde, wird bei einem Ultrafilter durch die Zurückhaltung der feinen Mineralienpartikel auf der Oberfläche des Filters eine extreme Vergrößerung der aktiven Oberfläche erreicht, die im Vergleich zu einem Feinfilter zu einer besseren Anreicherung mit Mineralien wie insbesondere Mg²⁺ und/oder Ca²⁺ im Wasser führt. Der Einsatz dieses speziellen Filters und die damit einhergehende Vergrößerung der aktiven Oberfläche ermöglicht eine weitere Reduzierung der Baugröße, wodurch eine kommerzielle Nutzung attraktiver wird. Ein weiterer Vorteil des Ultrafilters ist darin zu sehen, dass Krankheitserreger wie Keime oder Bakterien, die bei natürlich weichen Wässern evtl, in die Vorrichtung eingetragen werden, sicher zurückgehalten werden und somit nicht ins Ausgangswasser gelangen.

Durch den Einsatz eines Ultrafilters ermöglicht es die Erfindung, auf keimtötende Maßnahmen wie beispielsweise ein stetiges Dosieren von Silberionen zur Unterbindung von Bakterien- oder Keimwachstum oder auch andere Techniken zur Unterbindung von Keimwachstum in der Vorrichtung verzichten zu können, da diese Mikroorganismen die Ultrafiltermembranen nicht passieren können und somit sauberes Wassers austritt.

Das Ultrafiltermaterial ist in einer bevorzugten Ausführungsform der Erfindung als Hohlmembranmaterial ausgebildet. Durch die spezielle Anordnung der Ultrafiltermembranen und die Größe und Form der Poren in diesen Membranen wird eine Filterung der Feinstpartikel auf der Oberfläche erreicht, ohne die Membran dabei merklich zu verblocken, wodurch eine kontinuierliche Fließgeschwindigkeit in der Vorrichtung erreicht und dadurch eine mögliche Druckdifferenz nach der Vorrichtung vermieden wird.

Während sich Ultrafilter prinzipiell auch zur Abtrennung von Bakterien und Keimen aus Trinkwasser eignen, sind sie jedoch nicht durchgängig für Gasblasen. Es hat sich aber gezeigt, dass das verwendete Trinkwasser häufig Gase, zum Beispiel Kohlensäure beziehungsweise Kohlendioxid, oder auch Luft infolge ausgasender Medien enthält, welche zu einer Blasenbildung im Filter führen und diesen verstopfen.

Im Rahmen einer bevorzugten Ausführungsform ist daher vorgesehen, spezielle Ultrafilter einzusetzen. Demnach umfasst der Ultrafilter ein Membranpaket, welches teilweise hydrophobe Membranen umfasst. Unter hydrophoben Membranen werden Membranen verstanden, deren Oberfläche sich bei bestimmungsgemäßem Gebrauch des Ultrafilters zumindest teilweise nicht mit Wasser benetzt.

Insbesondere wird eine Membran mit einer Oberfläche verwendet, deren Kontaktwinkel gegenüber Wasser mehr als 90°, vorzugsweise mehr als 110°, besonders bevorzugt mehr 120° beträgt.

Als hydrophobes Material kann beispielsweise Polyethylen, Polypropolen oder Polytetraflouretylen (PTFE) verwendet werden.

Die restlichen Membranen des Membranpakets, also die nicht hydrophob im Sinne der Erfindung ausgebildeten Membranen, werden dagegen bei bestimmungsgemäßen Gebrauch mit Wasser benetzt.

Insbesondere wird für diese nicht hydrophoben Membranen ein Material verwendet, bei dem der Kontaktwinkel gegenüber Wasser weniger als 80°, vorzugsweise weniger als 75° beträgt.

Beispielsweise kann für diese Membranen ein Polyethersulfon verwendet werden. Denkbar ist auch die Verwendung von Polyacrylnitril oder/von ZelluloseTriAcetat.

Die beiden letztgenannten Materialien haben gegenüber Polyethersulfon einen kleineren Kontaktwinkel gegenüber Wasser. Aber bereits die Verwendung von Membranen aus Polyethersulfon ermöglicht die Ausbildung eines Filters zur Ultrafiltration.

Der Ausbildung des Ultrafilters als Membranpaket aus einer Kombination von hydrophoben und hydrophilen Membranen liegt die Erkenntnis zugrunde, dass die hydrophoben Membranen nicht mit dem zu filternden Medium benetzt werden, sondern dass Gasblasen in oder entlang der hydrophoben Membranen aufsteigen und den Ultrafilter verlassen können. Mithin wird ein solcher Ultrafilter nicht durch Gasblasen blockiert. Es hat sich in überraschender Weise herausgestellt, dass bereits ein relativ geringer Anteil an hydrophobem Material ausreicht, um ein Blockieren des Ultrafilters durch Gasblasen zu vermeiden.

Insbesondere weist das Membranpaket des Ultrafilters zu weniger als 50%, vorzugsweise zu weniger als 25%, besonders bevorzugt zu weniger als 10% hydrophobe Membranen auf, wobei in diesem Sinne die Anzahl der Membranen verstanden wird.

Die Membranen des Membranpakets sind bei einer bevorzugten Ausführungsform der Erfindung als Kapillarmembranen ausgebildet. Bei derartigen Kapillarmembranen wird durch die Wände der Kapillarmembranen eine große Oberfläche bereitgestellt, durch die das zu filternde Medium den Ultrafilter passieren kann. Vorzugsweise bildet das offene Ende der Membranen die Permeatseite, das heißt insbesondere ist vorgesehen, dass die Membranen in einer Hülse angeordnet und umgebogen sind, so dass die offenen Enden der Membranen den Auslauf des Ultrafilters bilden.

Das zu filternde Wasser läuft mithin von außen in die Membranen ein und tritt über das offene Ende der Kapillarmembranen aus. Gas kann dagegen entlang der hydrophoben Kapillarmembranen, welches sich im Betrieb nicht mit Flüssigkeit füllen, nach oben aufsteigen und den Ultrafilter verlassen.

Die Kapillarmembranen haben vorzugsweise einen mittleren Durchmesser (Außendurchmesser) von 1 bis 5 mm. Der mittlere Porendurchmesser liegt im Bereich zwischen 0,02 bis 0,2 µm.

Durch den Einsatz des Feinfilters beziehungsweise insbesondere durch die Ultrafiltration kann eine Anreicherung von Feinstpartikeln im jeweiligen Filtermaterial erreicht werden, durch die ein kontinuierlich gleichbleibender Austrag an Mg²⁺⁻ und/oder Ca²⁺⁻Ionen in das durch die Vorrichtung geleitete Wasser über eine verhältnismäßig lange Laufzeit gewährleistet werden.

Bei einer Weiterbildung ist in Strömungsrichtung vor dem magnesium- und calciumhaltigen Granulat ein Bett mit Aktivkohle angeordnet. So werden auch beim Einsatz der Vorrichtung ohne vorgeschaltete Umkehrosmose störende Gerüche und/oder Schwermetalle entfernt.

Die Aktivkohle ist vorzugsweise ebenfalls als Granulat ausgebildet. Beispielsweise kann extrudierter Kohlenstoff mit einem mittleren Durchmesser von weniger als 2 mm, vorzugsweise von weniger 1,5 mm, verwendet werden.

Die spezifische Oberfläche liegt vorzugsweise bei über 500, besonders bevorzugt bei über 1000 m²/g.

Vorzugsweise nimmt die Aktivkohle das 0,2 bis 0,4-fache Volumen des magnesium- und calciumhaltigen Granulats (im trockenen Zustand) ein.

Es kann eine Vorrichtung bereitgestellt werden, bei welcher das Gehäuse ein Innenvolumen von unter 30 Litern, bevorzugt von weniger als 7 l, besonders bevorzugt von unter 3 l hat. Insbesondere kann die Vorrichtung als Filterkerze ausgebildet sein, welche in eine Wasserleitung eingesetzt wird.

Vorzugsweise hat das calciumhaltige Granulat das 5 bis 50-fache, besonders bevorzugt das 10 bis 30-fache Volumen des magnesiumhaltigen Granulats (in trockenen Zustand).

Die Erfindung betrifft ein Verfahren zur Anreichung von entsalztem oder natürlich weichem Wasser mit Mineralien, insbesondere mittels der zuvor beschriebenen Vorrichtung.

Das entsalzte oder natürlich weiche Wasser wird gemäß der Erfindung zunächst über ein Bett geleitet, welches calcium- und magnesiumhaltige Partikel abgibt, wobei die Partikel sodann in einem Feinfilter festgesetzt werden und wobei sich diese dann größtenteils im Feinfilter nach und nach auflösen oder auch durch Abrieb immer kleiner werden und dabei Calcium und Magnesium an das aufzubereitende Wasser abgeben.

Es wird insbesondere ein Bett verwendet, welches kalziniertes Magnesiumcarbonat und/oder Kalksteinfeinsand umfasst.

In Betrieb der Vorrichtung nach der ersten Ausführungsform der Erfindung werden von den Partikeln dieses Granulats Feinpartikel abgelöst, welche sodann in dem Feinfilter, der vorzugsweise eine mittlere Porengröße zwischen 0,1 und 10 µm aufweist, hängen bleiben und sich im durchströmenden Wasser nach und nach größtenteils auflösen.

In Betrieb der Vorrichtung nach der zweiten Ausführungsform der Erfindung werden von den Partikeln des Granulats Feinpartikel abgelöst, welche sodann in dem Ultrafilter, der vorzugsweise eine mittlere Porengröße von maximal 0,2 µm, bevorzugt von maximal 0,1 µm aufweist, zurückgehalten werden und sich im durchströmenden Wasser nach und nach größtenteils auflösen.

Gemäß einer weiteren Ausführungsform der Erfindung ist vorgesehen, Feinfilter und Ultrafilter in Kombination zu verwenden. In einer bevorzugten Variante dieser Ausführungsform ist der Granulatschüttung in Strömungsrichtung folgend ein Feinfilter angeordnet und stromabwärts dieses Feinfilters ein Ultrafilter positioniert. Dadurch wird der Ultrafilter durch die Vorarbeit des Feinfilters entlastet.

So wird die verfügbare Oberfläche des Filterbetts erheblich vergrößert, was eine kompakte Bauweise der entsprechenden Vorrichtung ermöglicht.

Bei einer Weiterbildung der Erfindung wird das Trinkwasser vor dem Leiten über das Bett mittels einer Umkehrosmose entsalzt.

Es ist insbesondere vorgesehen, das Wasser mittels einer Umkehrosmose zu entsalzen, insbesondere entsalztes Wasser bereit zu stellen, welches eine Leitfähigkeit von weniger als 50 pS/cm hat.

Durch die anschließende Mineralisierung mit Calcium und Magnesium wird gemäß dem erfindungsgemäßen Verfahren so unabhängig von dem verfügbaren Trinkwasser eine im Wesentlichen gleichbleibende Wasserqualität erreicht.

Bei einer Weiterbildung der Erfindung wird das Wasser nach dem Leiten über das Bett, welches calcium- und magnesiumhaltige Partikel abgibt und dem Feinfilter bzw. Ultrafilter, in einen Tank überführt, um eine stagnationsbedingte, ungleiche Abgabe der Filterkerze auszugleichen.

Zur Erzeugung einer annähernd gleichbleibenden Mineralienkonzentration auch nach Stagnation kann der erfindungsgemäßen Vorrichtung ein Mischbehälter, beispielsweise ein sogenannter ADF Drucktank mit einem Volumen von mindestens 8 Litern, nachgeschaltet werden. Dieser wird insbesondere derart positioniert, dass er von oben nach unten durchströmt wird, um eine optimale Durchmischung zu gewährleisten.

Durch Verändern der Tankgröße ist es möglich, auch mit zunehmender Stagnation des Filterbettes eine im Wesentlichen gleichbleibende Mineralienkonzentration zu erhalten.

Durch das Einbringen der Mineralien stellt sich im aufbereitetem Wasser ein pH-Wert von über 6,5 vorzugsweise 8, insbesondere auch ein pH-Wert von zwischen 7,5 und 9 ein. Das aufbereitete Wasser ist mithin nicht sauer, was einer Korrosion, insbesondere der Bauteile einer Maschine zur Zubereitung von Getränken und Suppen, entgegenwirkt.

Das Wasser wird erfindungsgemäß auf eine Konzentration von Calcium von 4 bis 10 mg/l und/oder eine Konzentration von Magnesium von 0,5 bis 2 mg/l eingestellt.

Dieses Verhältnis von Calcium zu Magnesium hat sich bei Verkostungen mit bekannten Baristas als optimal für den Einsatz in Espressomaschinen erwiesen.

### Kurzbeschreibung der Zeichnungen

Der Gegenstand der Erfindung soll im Folgenden bezugnehmend auf die Zeichnungen Fig. 1 bis Fig. 7 anhand eines Ausführungsbeispiels näher erläutert werden.
- Fig. 1: zeigt eine perspektivische Ansicht einer Vorrichtung zur Anreicherung von entsalztem oder natürlich weichem Wasser mit Mineralien.
- Fig. 2: ist eine Schnittansicht der Fig. 1. Bezugnehmend auf die Schnittansicht gemäß
- Fig. 3: soll die Befüllung mit Kalksteinfeinsand und kalziniertem Magnesiumcarbonat näher erläutert werden.
- Fig. 4: ist eine Detailansicht des Oberteils der Vorrichtung und
- Fig. 5: eine Detailansicht des Unterteils der Vorrichtung.
- Fig. 6: ist ein schematisch dargestelltes Flussdiagramm für ein erfindungsgemäßes Verfahren zur Anreichung von entsalztem oder natürlich weichem Wasser mit Mineralien.
- Fig. 7: ist eine aufgeschnittene Detailansicht des Anschlussbereiches der als Filterkerze ausgebildeten Vorrichtung zur Anreicherung von entsalztem oder natürlich weichem Wasser mit Mineralien.
- Fig. 8: zeigt einen Längsschnitt durch eine Vorrichtung nach einer zweiten Ausführungsform.
- Fig. 9: zeigt eine schematische Ansicht eines Ultrafilters zum Einsatz in einer Vorrichtung nach einer zweiten Ausführungsform.
- Fig. 10: zeigt eine schematische Ansicht auf die Stirnseite, also den Auslauf des Ultrafilters gemäß Figur 9.

### Detaillierte Beschreibung der Zeichnungen

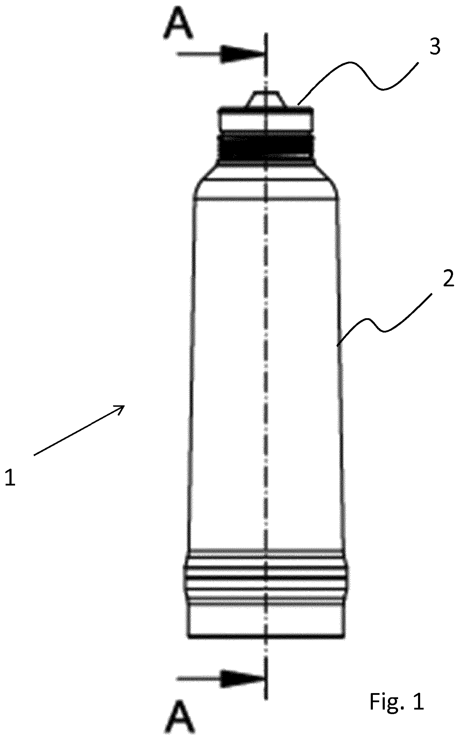

Fig. 1 zeigt eine perspektivische Ansicht einer Vorrichtung 1 zur Anreicherung von entsalztem oder natürlich weichem Wasser mit Mineralien.

Die Vorrichtung 1 zur Anreicherung von entsalztem oder natürlich weichem Wasser mit Mineralien ist als Filterkerze ausgebildet und umfasst ein Gehäuse 2 sowie einen Anschluss 3, welcher als Schraubanschluss ausgebildet ist. Eine derartige Filterkerze wird in eine an die Filterkerze angepasste Adaptervorrichtung angeschlossen, welche in einer Wasserleitung (nicht dargestellt) eingebaut ist.

Diese Leitung kann beispielsweise einer Maschine zur Zubereitung von Heißgetränken vorgeschaltet sein oder sich auch in der Maschine selbst befinden.

Derartige Filterkerzen als solche sind aus der Praxis bekannt.

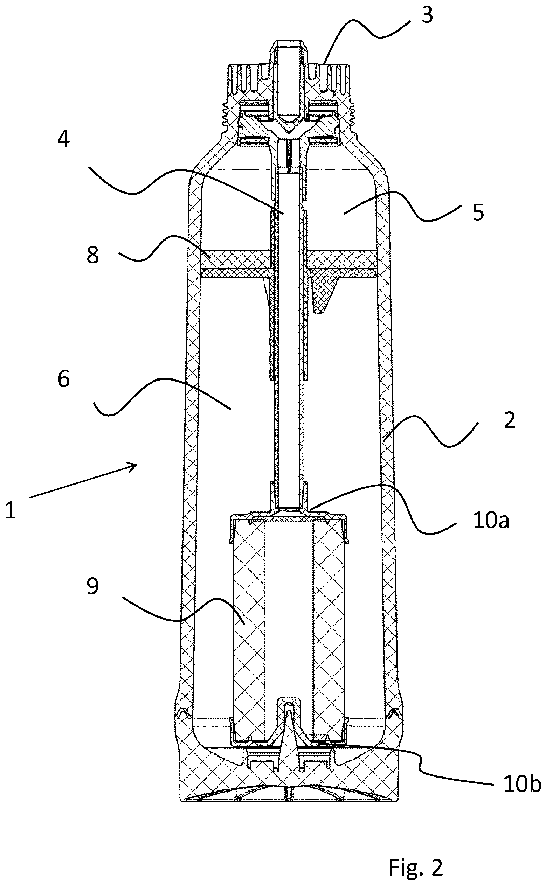

Fig. 2 ist eine Schnittansicht entlang der Linie A-A in Fig. 1.

Die als Filterkerze ausgebildete Vorrichtung 1 umfasst ein Gehäuse 2, welches in zumindest zwei Sektionen aufgeteilt ist.

Vom Anschluss 3 ausgehend, durchströmt das zu behandelnde Wasser zunächst eine erste Sektion 5, welche mit Aktivkohle (nicht dargestellt) gefüllt ist.

Dies dient vorwiegend dem Entfernen von organischen Substanzen und Chlor.

Über einen Filter 8, welcher beispielsweise als Vlies ausgebildet ist, durchströmt das zu mineralisierende Wasser sodann eine weitere Sektion 6, welche mit kalzinierten Magnesiumcarbonatpartikel sowie mit Kalksteinfeinsand gefüllt ist.

Über einen röhrenförmigen Feinfilter 9, welcher an seinem oberen und seinem unteren Ende durch die Halter 10a und 10b fixiert ist, strömt das mineralisierte Wasser sodann über das Rohr 4 zurück zum Anschluss 3.

Der Feinfilter 9 besteht aus meltblown Polypropylen-Fasern und weist eine mittlere Porengröße zwischen 0,1 und 10 µm auf.

Insbesondere wird ein Feinfilter 9 verwendet, welcher eine mittlere Porengröße von unter 5 µm aufweist.

Feine Partikel, welche sich aus dem Bett aus Kalksteinsand und kalziniertem Magnesiumcarbonat herauslösen, bleiben zunächst im Feinfilter 9 zurück. Durch diese Partikel wird die verfügbare Oberfläche des Filterbettes erheblich erhöht. Die im Filter festsitzenden feinen Partikel lösen sich sodann größtenteils nach und nach auf, wobei diese Magnesium und Calcium an das zu mineralisierende Wasser abgeben.

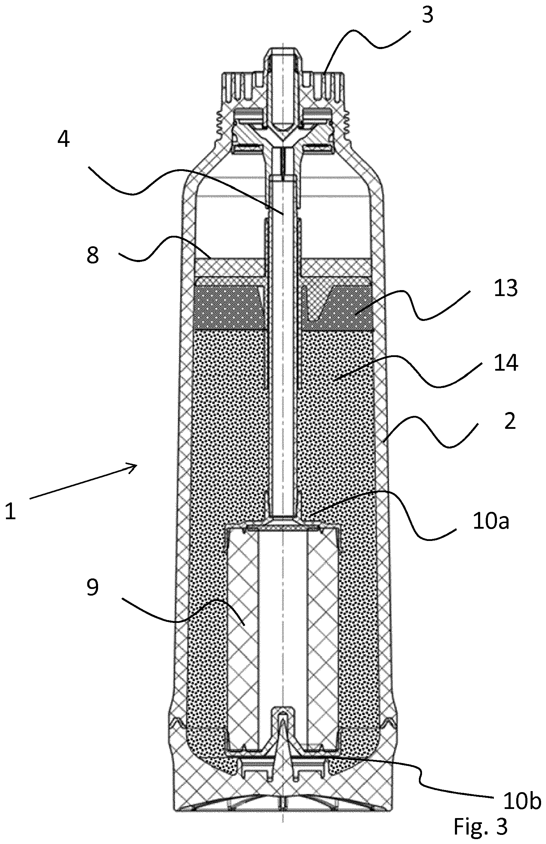

In Fig. 3 ist schematisch die Befüllung der zweiten Sektion mit magnesiumhaltigem Granulat 13 und calciumhaltigem Granulat 14 dargestellt.

Als calciumhaltiges Granulat 14 wird Kalksteinfeinsand verwendet und als magnesiumhaltiges Granulat wird kalziniertes Magnesiumcarbonat verwendet.

Das magnesiumhaltige Granulat 13 ist in Strömungsrichtung gesehen vor dem calciumhaltigen Granulat angeordnet. Zwischen den beiden Granulaten befindet sich aber keine Trennschicht, sodass es im Betrieb der Vorrichtung zumindest zu einer teilweisen Vermischung der Granulate kommt.

Insbesondere über die Menge der Granulate sowie aber auch über deren Partikelgröße kann das Verhältnis von Calcium zu Magnesium im aufbereiteten Wasser eingestellt werden.

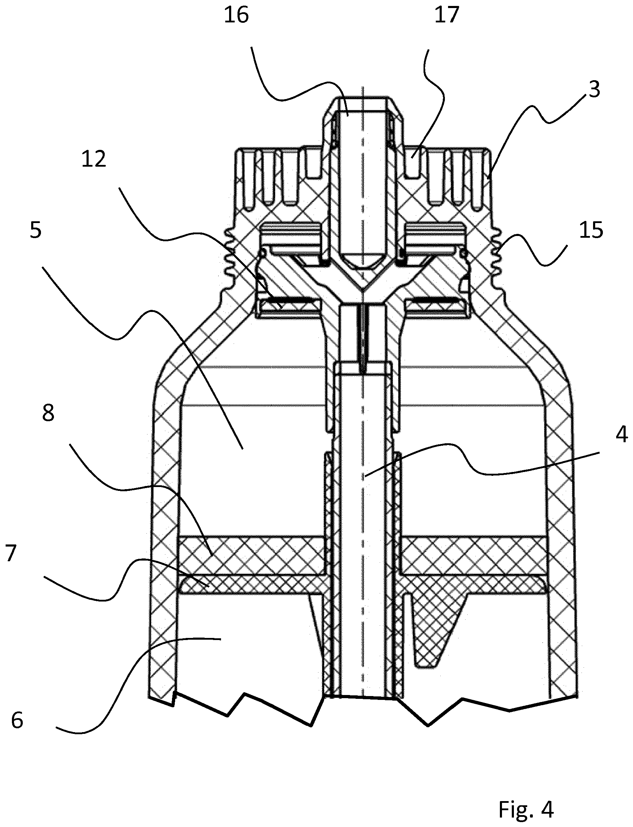

Fig. 4 ist eine Detailansicht des Oberteils der Vorrichtung. Zu erkennen ist der Vorlauf 16, über welchen das aufzubereitende Wasser um das Rohr 4 herum in die Vorrichtung einläuft sowie der Rücklauf 17, über welchen das mineralisierte Wasser über das Rohr 4 aus der Vorrichtung zurückfließt.

Der Anschluss 3 weist ein Gewinde 15 auf, um die Filterkerze einzusetzen.

Weiter ist nach dem Einlauf 3 in Strömungsrichtung zunächst ein Filter 12 angeordnet. Es kann sich dabei beispielsweise um eine Filterscheibe handeln, welches Partikel zurückhält.

Sodann ist nach der Sektion 5, welche mit Aktivkohle befüllt wird, ein weiterer Filter 8 vorgesehen. Es kann sich dabei um ein Vlies handeln. Der Filter 8 dient der Trennung der Aktivkohleschicht vom calcium- und magnesiumhaltigen Granulat, welches sich in der darunter liegenden Sektion 6 befindet.

Der Filter 8 wird über eine Siebscheibe 7, welche auf das Rohr 4 aufgesetzt ist, abgestützt.

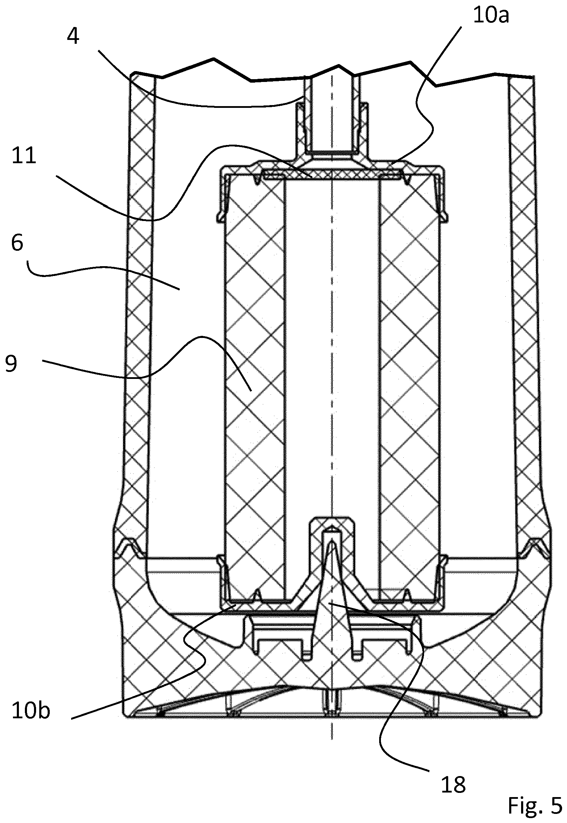

Fig. 5 zeigt eine Detailansicht des Unterteils der Vorrichtung. Zu erkennen ist insbesondere der in die Sektion 6 eingesetzte röhrenförmige Feinfilter 9.

Der Feinfilter 9 wird an seinen Stirnseiten mittels der Halter 10a und 10b fixiert.

Der Halter 10a ist auf das Rohr 4, welches zum Rücklauf führt, aufgesetzt.

Der Halter 10b wird von einem Dorn 18 gehalten, welcher aus dem Boden des Gehäuses der Vorrichtung heraussteht.

Das aufzubereitende Wasser fließt aus der Sektion 6 durch den Feinfilter zum Rohr 4. Dabei werden aus dem Filterbett herausgelöste Feinpartikel zurückgehalten.

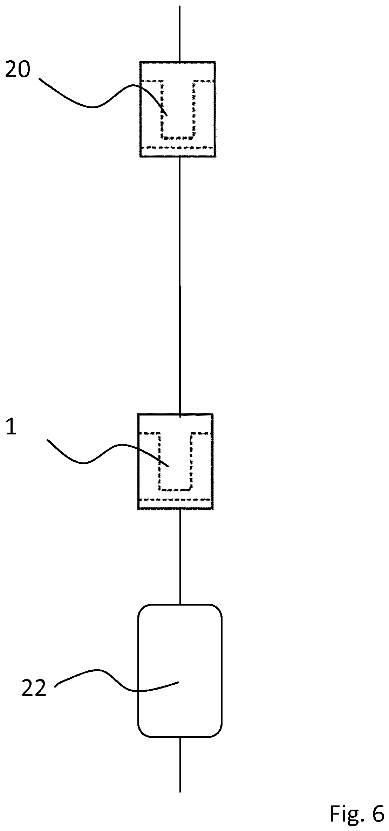

Fig. 6 zeigt bezugnehmend auf ein schematisch dargestelltes Flussdiagramm ein Ausführungsbeispiel des erfindungsgemäßen Verfahrens.

Das aufzubereitende Trinkwasser durchläuft zunächst eine Umkehrosmose 20, wodurch das Wasser größtenteils entsalzt wird.

So wird unabhängig von der örtlichen Trinkwasserbeschaffenheit zunächst ein im Wesentlichen demineralisiertes Wasser bereit gestellt.

Nach Durchlaufen der Umkehrosmose durchläuft das zu mineralisierende Wasser die in den vorangehenden Figuren dargestellte Vorrichtung 1 zur Mineralisierung von Wasser.

Sodann läuft das Wasser in einen Mischbehälter 22.

Der Mischbehälter kann beispielsweise als Drucktank ausgebildet sein und wird vorzugsweise von oben nach unten durchströmt, um eine optimale Durchmischung und eine nahezu gleichbleibende Qualität des mineralisierten Wassers, auch nach Stagnation, zu gewährleisten.

Das so aufbereitete Wasser kann sodann beispielsweise einer Maschine zur Zubereitung von Heißgetränken (nicht dargestellt) zugeführt werden.

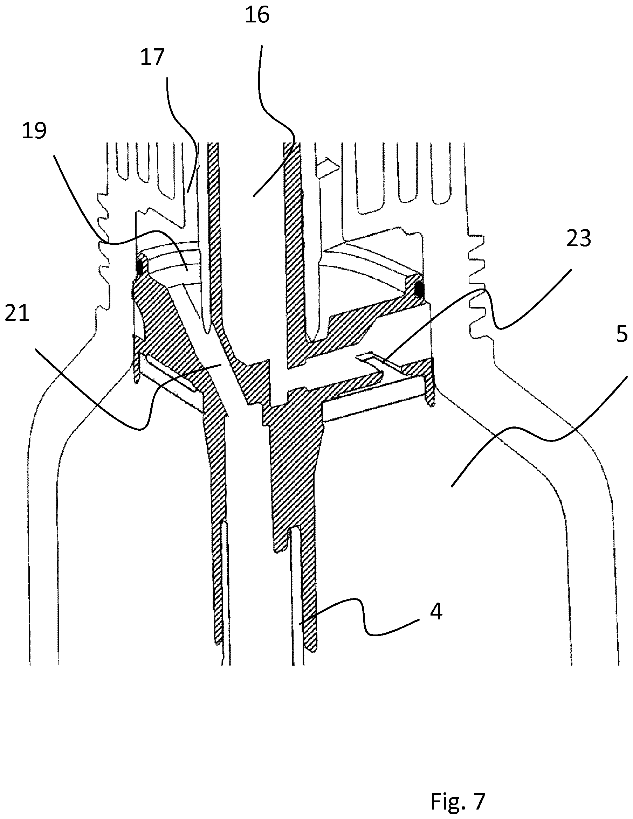

Fig. 7 zeigt eine aufgeschnittene Ansicht des Kopfbereiches der Vorrichtung zur Mineralisierung von entsalztem oder natürlich weichem Wasser anhand welcher die Wasserführung im Kopfbereich erläutert werden soll.

Im Kopfbereich befindet sich ein Einsatz 19, über den Vorlauf 16 läuft das zu behandelnde Wasser in den Einsatz 19, wird zur Seite hingeleitet und tritt über die Öffnung 23 in die Sektion 5.

Wie bereits im Zusammenhang mit Fig. 2 erläutert, durchläuft das Wasser sodann das Innenvolumen der Vorrichtung und strömt über das Rohr 4 zurück.

Der Einsatz 19 ist mit dem Rohr 4 verbunden und weist einen Durchgang 21 auf, über welchen das mineralisierte Wasser zum Rücklauf 17 geführt wird.

Es konnte eine kompakte Vorrichtung bereitgestellt werden, mittels welcher sich entsalztes oder natürlich weiches Wasser mit Calcium und/oder Magnesium anreichern lässt.

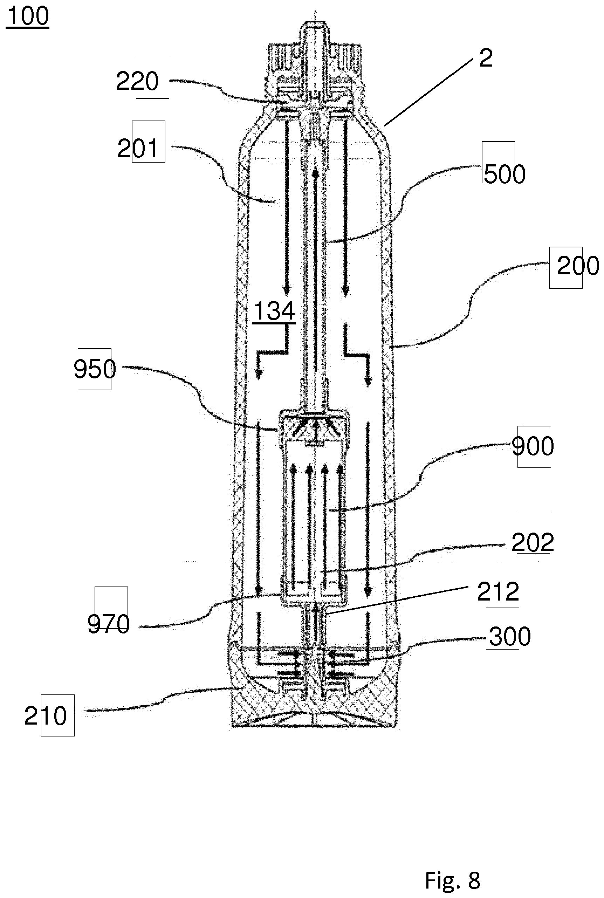

Figur 8 zeigt einen Längsschnitt durch eine Vorrichtung nach einer zweiten Ausführungsform der Erfindung.

Die in Figur 8 gezeigte Darstellung der Vorrichtung zeigt als Beispiel eine Ausführungsform mit einer Remineralisierungskerze. Diese ist aufgebaut aus einer Aussenhülle als Gehäuse 2, welche ein oberes Gehäuseteil 200 und ein unteres Gehäuseteil 210 umfasst. Die beiden Gehäuseteile 200, 210 sind miteinander verbunden und bilden dadurch das Gehäuse als Aussenhülle der Vorrichtung 100.

Die Aussenhülle 2 der Vorrichtung weist als Gehäuse des Weiteren einen Umlenkeinsatz 220 auf, durch den im Betrieb der Vorrichtung 100 das Wasser in die erste Kammer 201 der Vorrichtung 100 gelangt, welche mit Granulat 134 gefüllt ist. Das Wasser wird im Betrieb der Vorrichtung 100 an deren Boden über einen Grobfilter 300 durch ein Übergangsstück in Gestalt eines Kanals 212 in die zweite Kammer 202 geführt. In dieser befindet sich der Ultrafilter 900. Der Ultrafilter 900 ist über Halterungen 950, 970 an beiden Enden in der zweiten Kammer 202 fixiert. Eine Halterung 950, 970 kann oder beide Halterungen 950, 970 können insbesondere eine Flanschverbindung zwischen Ultrafilter 900 und zweiter Kammer 202 herstellen.

Anschließend wird das gefilterte Wasser durch das Steigrohr 500 aus der Vorrichtung 100 transportiert.

Die Vorrichtung 100 zur Anreicherung von entsalztem oder natürlich weichem Wasser mit Mineralien umfasst also allgemeiner ausgedrückt eine durchströmbare erste Kammer 201 mit ersten Mitteln zum Behandeln vom Wasser und eine durchströmbare zweite Kammer 202 mit zweiten Mitteln zum Ausführen eines weiteren Behandlungsschritts. Die Vorrichtung 100 weist des Weiteren einen Zulauf zum Zuführen des Wassers in die erste Kammer 201 in Gestalt des Umlenkeinsatzes 220 und einem Ablauf zum Abführen des behandelten Wassers aus der zweiten Kammer 202 in Gestalt des Steigrohrs 500 auf.

In der ersten Kammer 201 ist eine Granulatschüttung 134 angeordnet. Die zweite Kammer 202 enthält einen Ultrafilter 900, an welchem sich die Feinstpartikel aus den in der ersten Kammer 201 enthaltenen Partikeln des Granulats 134 anreichern, so dass sich dadurch eine extreme Vergrößerung der aktiven Oberfläche erreichen lässt. Dies führt einerseits zu einer besseren Anreicherung des zu behandelnden Wassers mit Mineralien und andererseits zu einer deutlichen Baugrößenreduzierung der Vorrichtung gegenüber einer Vorrichtung gemäß der ersten Ausführungsform und erst recht zu einer Vorrichtung ohne der Granulatschüttung nachgeordneten Feinfilter beziehungsweise Ultrafilter.

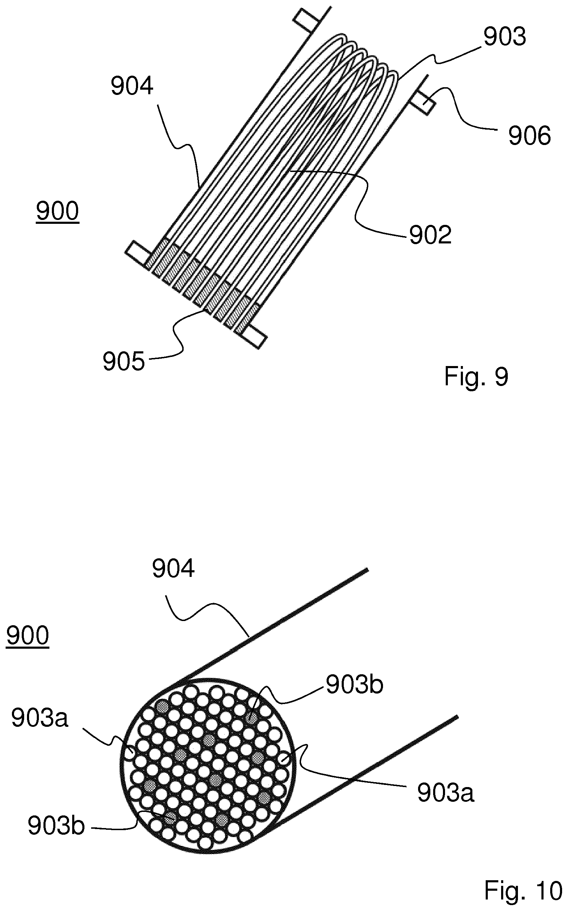

Figur 9 zeigt eine schematische Ansicht eines Ultrafilters 900. Der Ultrafilter 900 umfasst ein Membranpaket 902, welches in einer Hülse 904, die vorzugsweise aus Kunststoff ausgebildet ist, angeordnet ist. Die Membranen des Membranpakets 902 sind als Kapillarmembranen ausgebildet. Diese sind in der Hülse 904 umgebogen und permeatseitig in einer Vergussmasse 905 eingebettet. Das offene Ende der Kapillarmembranen bildet somit den Auslauf. Die Hülse 904 umfasst Befestigungsmittel 906, welche beispielsweise als Bajonettverschluss oder als Gewinde ausgebildet sein können.

Es versteht sich, dass in dieser schematischen Ansicht nur wenige Kapillarmembranen dargestellt sind, und dass der Ultrafilter 900 tatsächlich eine Vielzahl von Kapillarmembranen 903 aufweist.

Figur 10 zeigt eine schematische Ansicht auf die Stirnseite, also den Auslauf des Ultrafilters. Zu erkennen ist, dass ein Teil der Kapillarmembranen 903b in diesem Ausführungsbeispiel zur schematischen Darstellung der Erfindung mit einer Textur versehen ist. Die Kapillaren 903b sind hydrophob ausgebildet, wohingegen die Kapillarmembranen 903a derart hydrophil sind, dass sie bei bestimmungsgemäßen Gebrauch das Wasser aufnehmen können.

Im Betrieb kann nunmehr Gas durch die hydrophoben Kapillarmembranen 903b nach oben aufsteigen. Das zu filternde Wasser läuft durch die offenen Enden der Kapillarmembranen 903a aus. Der Ultrafilter 900 kann so nicht durch Gasblasen blockiert werden.

### Bezugszeichenliste

- 1, 100: Vorrichtung zur Aufbereitung von entsalztem oder natürlich weichem Wasser
- 2: Gehäuse
- 200: oberer Teil der Außenhülle, oberer Teil des Gehäuses
- 210: unterer Teil der Außenhülle, unterer Teil des Gehäuses
- 3: Anschluss
- 4: Rohr
- 5: Sektion
- 6: Sektion
- 7: Siebscheibe
- 8: Filter/Vlies
- 9: Feinfilter
- 10a: Halter
- 10b: Halter
- 11: Vlies
- 12: Filter
- 13: Magnesiumhaltiges Granulat
- 14: Calciumhaltiges Granulat
- 134: Granulatschüttung
- 15: Gewinde
- 16: Vorlauf
- 17: Rücklauf
- 18: Dorn
- 19: Einsatz
- 20: Umkehrosmose
- 21: Durchgang
- 22: Mischbehälter
- 23: Öffnung
- 201: erste Kammer
- 202: zweite Kammer
- 212: Übergangsstück, Kanal zwischen erster und zweiter Kammer
- 220: Umlenkeinsatz, Zulauf
- 300: Grobfilter
- 500: Steigrohr
- 950: Flansch, Halter zur Fixierung des Ultrafilters
- 970: Flansch, Halter zur Fixierung des Ultrafilters
- 900: Ultrafilter
- 902: Membranpaket 902
- 903: Kapillarmembran
- 903a: hydrophober Anteil der Kapillarmembranen eines Membranpakets
- 903b: hydrophiler Anteil der Kapillarmembranen eines Membranpakets
- 904: Hülse
- 905: Vergussmasse
- 906: Befestigungsmittel, Bajonettverschluss, Gewinde

## Patentansprüche

1. Verfahren zur Anreicherung von entsalztem oder natürlich weichem Wasser mit Mineralien ,
wobei das zu behandelnde Wasser zunächst über ein Bett geleitet wird, welches calcium- und/oder magnesiumhaltige Partikel abgibt, wobei die Partikel sodann in einem Feinfilter (9) und/oder einem Ultrafilter (900) festgesetzt werden und diese sich dann größtenteils in dem Feinfilter (9) und/oder in dem Ultrafilter (900) im aufzubereitenden Wasser auflösen und dabei Calcium und/oder Magnesium an das aufzubereitende Wasser abgeben, und wobei das Wasser auf eine Konzentration von Calcium von 4 bis 10 mg/l und/oder auf eine Konzentration von Magnesium vom 0,5 bis 2 mg/l eingestellt wird.

2. Verfahren zur Anreicherung von entsalztem oder natürlich weichem Wasser mit Mineralien nach dem vorstehenden Anspruch,
**dadurch gekennzeichnet, dass**
das Trinkwasser vor dem Leiten über das Bett mittels einer Umkehrosmose entsalzt wird.

3. Verfahren zur Anreicherung von entsalztem oder natürlich weichem Wasser mit Mineralien nach einem der vorstehenden Ansprüche,
**dadurch gekennzeichnet, dass**
sich der pH-Wert durch das Einbringen der Mineralien auf einen Wert von über 7, insbesondere auf einen pH-Wert zwischen 7,5 und 9 einstellt

4. Verfahren zur Anreicherung von entsalztem oder natürlich weichem Wasser mit Mineralien nach einem der vorstehenden Ansprüche,
**dadurch gekennzeichnet, dass**
das mineralisierte Wasser einer Maschine zur Zubereitung von Getränken, insbesondere von Heißgetränken, zugeführt wird.

5. Verfahren zur Anreicherung von entsalztem oder natürlich weichem Wasser mit Mineralien nach einem der vorstehenden Ansprüche,
**dadurch gekennzeichnet, dass**
ein Bett verwendet wird, welches kalziniertes Magnesiumkarbonat und/oder Kalksteinfeinsand umfasst.

6. Verfahren zur Anreicherung von entsalztem oder natürlich weichem Wasser mit Mineralien nach einem der vorstehenden Ansprüche,
**dadurch gekennzeichnet, dass**
ein Feinfilter (9) mit einer mittleren Porengröße von 0,1 bis 10 µm und/oder ein Ultrafilter (900) mit einer mittleren Porengröße von maximal 0,1 µm verwendet wird.

## Claims

1. A method for enriching desalinated or naturally soft water with minerals,
wherein the water to be treated is initially guided over a bed, which releases particles containing calcium and/or magnesium, wherein the particles are then deposited in a fine filter (9) and/or an ultrafilter (900), and said particles then largely dissolve in the fine filter (9) and/or in the ultrafilter (900) in the water to be treated and thereby release calcium and/or magnesium to the water to be treated, and wherein the water is set to a concentration of calcium of 4 to 10 mg/l and/or to a concentration of magnesium of 0.5 to 2 mg/l.

2. The method for enriching desalinated or naturally soft water with minerals according to the preceding claim,
**characterized in that**
the drinking water is desalinated by means of a reverse osmosis prior to the guidance over the bed.

3. The method for enriching desalinated or naturally soft water with minerals according to any one of the preceding claims,
**characterized in that**
the pH value is set to a value of above 7, in particular to a pH value of between 7.5 and 9, by means of the introduction of the minerals.

4. The method for enriching desalinated or naturally soft water with minerals according to any one of the preceding claims,
**characterized in that**
the mineralized water is fed to a machine for the preparation of beverages, in particular of hot beverages.

5. The method for enriching desalinated or naturally soft water with minerals according to any one of the preceding claims,
**characterized in that**
a bed is used, which comprises calcined magnesium carbonate and/or fine limestone sand.

6. The method for enriching desalinated or naturally soft water with minerals according to any one of the preceding claims,
**characterized in that**
a fine filter (9) with an average pore size of 0.1 to 10 µm and/or an ultrafilter (900) with an average pore size of maximally 0.1 µm is used.

## Revendications

1. Procédé consistant à enrichir de l'eau déminéralisée ou naturellement douce en minéraux,
l'eau à traiter étant d'abord acheminée par un lit qui émet des particules contenant du calcium et/ou du magnésium, les particules étant ensuite fixées dans un filtre fin (9) et/ou un ultrafiltre (900) et celles-ci se dissolvant ensuite en grande partie dans le filtre fin (9) et/ou dans l'ultrafiltre (900) dans l'eau à traiter et émettant du calcium et/ou du magnésium dans l'eau à traiter, et l'eau étant ajustée à une concentration de calcium de 4 à 10 mg/l et/ou à une concentration de magnésium de 0,5 à 2 mg/l.

2. Procédé consistant à enrichir de l'eau déminéralisée ou naturellement douce en minéraux selon la revendication précédente,
**caractérisé en ce que**
l'eau potable est déminéralisée par osmose inverse avant d'être acheminée par le lit.

3. Procédé consistant à enrichir de l'eau déminéralisée ou naturellement douce en minéraux selon l'une des revendications précédentes,
**caractérisé en ce que**
la valeur du pH est définie sur une valeur de plus de 7, en particulier sur une valeur du pH comprise entre 7,5 et 9, par l'apport des minéraux.

4. Procédé consistant à enrichir de l'eau déminéralisée ou naturellement douce en minéraux selon l'une des revendications précédentes,
**caractérisé en ce que**
l'eau minéralisée est amenée à une machine pour la préparation de boissons, en particulier de boissons chaudes.

5. Procédé consistant à enrichir de l'eau déminéralisée ou naturellement douce en minéraux selon l'une des revendications précédentes,
**caractérisé en ce que**
un lit contenant du carbonate de magnésium calciné et/ou du sable fin de calcaire est utilisé.

6. Procédé consistant à enrichir de l'eau déminéralisée ou naturellement douce en minéraux selon l'une des revendications précédentes,
**caractérisé en ce que**
un filtre fin (9) qui a une grosseur de pores moyenne de 0,1 à 10 µm et/ou un ultrafiltre (900) qui a une grosseur de pores moyenne de maximum 0,1 µm est utilisé.
